# EUROPÄISCHE PATENTANMELDUNG

(11) **EP 2 431 173 A1**
(43) Veröffentlichungstag der Anmeldung: **21.03.2012**
(21) Anmeldenummer: 10010014.8
(22) Anmeldetag: 21.09.2010
(51) Int. Cl.: B32B 17/04, B32B 27/04, B44C 5/00, B44C 5/04, B32B 5/22

(54) **Feuerfestes Laminat**

(71) Anmelder: FunderMax GmbH, 9300 St. Veit an der Glan (AT); Johns Manville Europe GmbH, 86399 Bobingen (DE)
(72) Erfinder: Ullrich, Gerald, Dr., 7035 Steinbrunn (AT); Horvath, Michael, 1220 Wien (AT); Ketzer, Michael, 97903 Collenberg (DE); Gleich, Klaus Friedrich, 80126 Highland Ranch (US)
(74) Vertreter: Mai, Dörr, Besier

(57) **Zusammenfassung**

Es wird ein feuerfestes Laminat beschrieben, welches sich durch seinen niedrigen Brennwert ≤3 MJ/kg nach ISO 1716 auszeichnet und durch seinen speziellen Mehrschichtaufbau herausragende mechanische Eigenschaften und eine außerordentlich gute Stabilität unter wechselnden Klimaverhältnissen (heiß/feucht/kalt/trocken) besitzt. Das erfinderische Laminat umfasst mehrere Mineral- bzw. Glasvliese mit unterschiedlichen Funktionalitäten und Bestandteilen. Darunter fallen hochgefüllte Vliese, B-Stage-Binder und andere Additive. Seine große mechanische Festigkeit, sowie die außerordentlich gute Stabilität unter wechselnden Klimaverhältnissen (heiß/feucht/kalt/trocken) ermöglichen seine sinnvolle Verwendung in vielen Bereichen, wo bisher ausschließlich Laminate nach EN 438 Einsatz finden und darüber hinaus.

## Beschreibung

### Technisches Gebiet

Die Erfindung betrifft einen neuartigen hochstabilen feuerfesten Plattenwerkstoff (Laminat), das Verfahren zu dessen Herstellung und dessen Verwendung.

### Stand der Technik

Es ist bekannt, Schichtpressstoffplatten für Innen- und Außenanwendungen im Bausektor und auch anderen Bereichen einzusetzen, wobei sowohl an die Plattenoberfläche als auch an den Plattenkern hohe Anforderungen betreffend verschiedensten Eigenschaften gestellt werden. Einen guten Überblick über die gewünschten Platteneigenschaften und Prüfmethoden dazu gibt die Norm EN 438. Beispiele für in der EN 438 beschriebene Laminateigenschaften sind insbesondere die Biegefestigkeiten, Zugfestigkeiten, Wasseraufnahmen in unterschiedlichen Umgebungen, Anschmutzbarkeit, Kratz- und Abriebfestigkeiten, Beständigkeiten gegen Wasserdampf oder trockener Hitze.

Eine der wichtigsten Eigenschaften von HPL (High Pressure Laminate) Platten in der Bauindustrie ist Ihr Brandverhalten. Das Brandverhalten wird in Europa nach SBI (single burning item) gestestet, A1 und A2 Klassifizierung als nicht brennbare Materialien werden zusätzlich nach ISO 1716 getestet, wobei hier u.a. der Brennwert des Materials ≤3MJ/kg sein muss.

Aktuelle schwer brennbare HPL bestehen aus mit flammgeschützten Kunstharzen imprägnierten (eventuell auch flammgeschützten) Papieren, welche bei hohen Drucken und Temperaturen um 150°C in Etagenpressen zu in sich homogenen monolithischen Plattenkörpern verpresst werden.

Die Klassifizierung dieser Werkstoffe erfolgt wie obengenannt nach SBI, wobei die bestenfalls erreichbare Klasse B1 (schwer entflammbar) erreicht wird. Aufgrund der Verwendung von Cellulose als Trägermaterial und Kunstharzen als Bindemittel ist eine Brandklasse A nach ISO 1716 mit dem Stand der Technik entsprechenden herkömmlichen schwer brennbaren HPL nicht erreichbar.

Faserzementplatten wie sie aktuell von mehreren Produzenten weltweit hergestellt werden können als A2 - Werkstoff (nach ISO 1716) dargestellt werden, weisen aber sehr geringe mechanische Festigkeiten auf und finden auch aufgrund ihrer niedrigen Oberflächengüte nur in trivialen dekorativen Aufgaben Anwendung.

Die Patentanmeldung WO 2006/111458 A1 beschreibt eine Laminat Platte sowie ein Verfahren zur Herstellung derselben, wobei diese einen Brennwert ≤3MJ/kg, getestet nach ISO 1716, aufweist. Der Aufbau der Platte in WO 2006/111458 A1 wird vor der Verpressung wie folgt beschrieben:
Der Aufbau besitzt als erste Lage ein imprägniertes (Dekor)papier, danach eine oder mehrere Lagen mit mindestens einem anorganischen Füllstoff gefüllte,
beharzte Glasvliese wobei das Verhältnis von Harz zu Füllstoff/Glasvlies so gewählt wird, dass ein Brennwert ≤3MJ/kg nach ISO 1716 erhalten wird. Der Aufbau kann sowohl asymmetrisch als auch symmetrisch mit 1 resp. 2 Lagen imprägniertem Papier als Deckschichten ausgeführt sein.

Dieser Aufbau ermöglicht die Herstellung von Laminaten mit Brennwerten ≤3MJ/kg nach ISO 1716, weist jedoch deutliche Schwächen bezüglich mechanischer Festigkeit bzw. Wasserstabilität und auch der Oberflächengüte (Glanz, Homogenität, Glätte) der erzeugten Laminate auf. Nicht brennbare Laminate, insbesondere für die Verwendung im intensiv beanspruchten Interiorbereich und im Exteriorbereich, sind durch dieses Verfahren nicht in ausreichender Qualität herzustellen.

Hier will die gegenständliche Erfindung Abhilfe schaffen.

### Kurze Darstellung der Erfindung

Die der Erfindung zu Grunde liegende Aufgabe besteht nun darin, insbesondere mechanisch sehr stabile Laminate, vorzugsweise nicht brennbare Laminate, d.h. solche die einen Brennwert ≤ 3MJ/kg nach ISO 1716 aufweisen, insbesondere für die Verwendung im intensiv beanspruchten Innenbereich als auch im Außenbereich, in hervorragender Qualität herzustellen.

Die Aufgabe wird erfindungsgemäß durch einen Mehrschichtaufbau des Laminates, insbesondere gemäß den kennzeichnenden Teilen der unabhängigen Ansprüche gelöst, wobei die verschiedenen Lagen unterschiedliche Funktionalitäten aufweisen. Die äußere Lage, die aus natur- und kunstharzimprägnierten Papieren, Vliesen, Matten oder Geweben bestehen kann, ermöglicht eine ansprechende Oberflächengüte des Laminates. Die darunter liegende Schicht besteht aus einer speziell beharzten "Klebeschicht", die zur Verbesserung der Oberflächengüte, der mechanischen Eigenschaften und der Feuchtebeständigkeit dient. Die darunter liegende Schicht besteht aus einer speziellen niedrig beharzten "Verstärkungs- bzw. Stützschicht", die zum Ausgleich der unregelmäßigen Strukturen aus dem Laminatinneren dient und die Festigkeit und mechanischen Werte des Laminats erhöhen. Der innere Kernbereich des Laminats besteht aus mehreren, hochgefüllten Kernlagen die dem fertigen Laminat seine hervorragende Stabilität gegenüber wechselnden Klimaverhältnissen und Feuchtigkeit verleihen.

Die erfindungsgemäßen Laminate zeichnen sich sowohl durch eine außerordentlich hohe mechanische Stabilität und herausragende Oberflächengüte als auch durch eine außerordentlich hohe Feuchtestabilität unter wechselnden klimatischen Bedingungen aus. Durch den äußerst geringen Brennwert kann es besonders in jenen Anwendungsbereichen eingesetzt werden, wo herkömmliche Cellulosefaser/Kunstharz HPL aufgrund ihrer Brennbarkeit nicht verwendet werden können.

Vorteilhafte Weiterbildungen der Erfindung sind den abhängigen Ansprüchen zu entnehmen.

### Kurze Beschreibung der Darstellungen

Der Aufbau der Laminate bzw. der Laminat-Vorprodukte der gegenständlichen Erfindung kann sowohl symmetrisch als auch asymmetrisch ausgeführt sein.

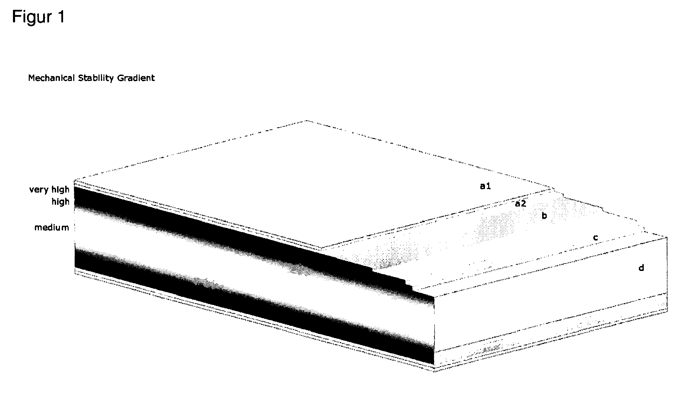

In Fig. 1 wird eine mögliche symmetrische Anordnung des erfindungsgemäßen Aufbaus gezeigt. Das Laminat-Vorprodukt besteht aus der Außenschicht a2, auf die optional eine Schutzschicht a1 aufgebracht sein kann. Die Schicht b (Klebeschicht) besteht aus einem oder mehreren Klebevliesen, die zwischen der Außenschicht a und der Stützschicht c angebracht ist. Die Verstärkungsschicht c besteht aus einem oder mehreren Verstärkungsvliesen. Die Kernschicht d besteht aus mehreren, hochgefüllten textilen Flächen, die nach der Verpressung gemeinsam mit allen darüber und darunterliegenden Lagen zu einem monolithischen Verbundstoff verschmelzen. Zwischen Kernschicht d und Verstärkungsschicht c kann optional eine weitere Klebeschicht b (nicht eingezeichnet) angeordnet sein, die aus einem oder mehrere Klebevliesen besteht. Ab einer Laminatdicke von >2 mm können zur zusätzlichen Erhöhung der mechanischen Stabilität Klebeschichten auch im Laminatkern eingefügt werden.

Fig. 1 zeigt außerdem beispielhaft den typischen Verlauf der mechanischen Festigkeiten, die vom Laminatkern nach außen hin zunehmen. Nach der Verpressung sind alle Einzellagen untrennbar miteinander verbunden.

### Gegenstand der Erfindung

Gegenstand der vorliegenden Erfindung ist somit ein, vorzugsweise nicht brennbares Laminat, d.h. ein solches, welches einen Brennwert ≤3MJ/kg nach ISO 1716 aufweist, umfassend:
A) einen symmetrisch oder asymmetrisch angeordneten Laminatkern, aus einer Matrix umfassend
   - 3 - 17 Gew.-% organisches Binderharz
   - 45 - 85% Gew.-% anorganische Füllstoffe
   - 10 - 25% Gew.-% anorganische und/oder organische Fasern,
      wobei der Laminatkern mehrlagig aufgebaut ist, die einzelnen Kernlagen jedoch nach Produktfertigstellung untereinander und auch mit den darunter und darüber liegenden funktionellen Lagen untrennbar verbunden sind, und ferner
   - eine Dichte von mindestens 1,70 g/cm³ bestimmt gemäß EN ISO 1183-1:2004, vorzugsweise von mindestens 1,80g/cm³,
   - eine Biegefestigkeit von mindestens 35 MPa bestimmt gemäß EN ISO 178:2003, vorzugsweise von mindestens 45 MPa,
   - ein Biegemodul von mindestens 7 GPa bestimmt gemäß EN ISO 178:2003, vorzugsweise von mindestens 8,5 GPa, aufweist,
B) mindestens eine Stützschicht, die auf mindestens einer der beiden Oberflächen des Laminatkerns aufgebracht ist, wobei die Stützschicht
   - mindestens eine Lage, vorzugsweise mindestens zwei Lagen, aus textilem Flächengebilde umfasst, das einen endverfestigten B-Stage Binderanteil von 5-30 Gew.-% aufweist, wobei sich diese Angabe auf das Gesamtgewicht der textilen Fläche mit Binder nach dessen Überführung in den B-Stage Zustand bezieht,
C) mindestens eine Klebeschicht, die auf der zum Laminatkern abgewandten Oberfläche der Stützschicht aufgebracht ist, wobei die Klebeschicht
   - mindestens eine Lage, vorzugsweise mindestens zwei Lagen, aus textilem Flächengebilde umfasst, das einen endverfestigten B-Stage Binderanteil von 40-80 Gew.-% aufweist, wobei sich diese Angabe auf das Gesamtgewicht der textilen Fläche mit Binder nach dessen Überführung in den B-Stage Zustand bezieht,
D) mindestens eine Dekorschicht, die auf der zum Laminatkern abgewandten Oberfläche der Klebschicht aufgebracht ist, wobei die Dekorschicht mehrschichtig aufgebaut sein kann,
E) gegebenenfalls mindestens eine Schutzschicht, die auf der zum Laminatkern abgewandten Oberfläche der Dekorschicht aufgebracht ist.

Das erfindungsgemäße Laminat ist insbesondere mechanisch sehr stabil.

Der Laminatkern ist mehrlagig aufgebaut, jedoch sind nach Produktfertigstellung alle Kernlagen untereinander und auch mit den darunter und darüber liegenden funktionellen Lagen untrennbar, d.h. irreversibel, verbunden. Ein Nachweis der Mehrlagigkeit des Kernes gelingt durch mikroskopische Analyseverfahren sowie durch Lösen des Materialverbundes mittels mineralischer Säuren.

Das vorstehend beschriebene Laminat, das Herstellungsverfahren zum selben und dessen Verwendung sind Bestandteil der Erfindung, ebenso wie die nachfolgend beschriebenen, erfindungsgemäß eingesetzten Laminat-Vorprodukte, die wertvolle Zwischenprodukte in der Herstellung der erfindungsgemäßen Laminate darstellen.

Weiterer Gegenstand der vorliegenden Erfindung ist somit ein Laminat-Vorprodukt, welches bevorzugt einen Brennwert ≤3MJ/kg nach ISO 1716 aufweist, umfassend:
A) einen symmetrisch oder asymmetrisch angeordneten Laminatkern, der
   - mindestens zwei Lagen, vorzugsweise mindestens drei Lagen, aus mineralisch gefülltem textilen Flächengebilde aufweist, wobei das textile Flächengebilde mit einem Binderanteil von 5-20 Gew.-%, wobei sich diese Angabe auf das Gesamtgewicht der textilen Fläche mit Binder bezieht, verfestigt ist, und
   - mit 60 bis 90 Gew.-% einer Kernformulierung umfassend:
      (i) 1 bis 20 Gew.-%, vorzugsweise 2 bis 15 Gew.-%, insbesondere 8 bis 12 Gew.-%, thermisch härtbares Natur- und/oder Kunstharz,
      (ii) 40 bis 90 Gew.-%, vorzugsweise 45 bis 80 Gew.-%, insbesondere 50 bis 75 Gew.-%, anorganische Füllstoffe,
      (iii) 1 bis 30 Gew.-%, vorzugsweise 4 bis 25 Gew.-%, insbesondere 9
         bis 18 Gew.-%, Verdünnungswasser,
         getränkt ist und die erhaltenen Kernlagen bis zu einem Restwassergehalt von bis zu 8 Gew.-%, vorzugsweise bis zu 5 Gew.-%, getrocknet und das Harz in einen reaktiven B-Stage Zustand übergeführt wurde,
B) mindestens eine Stützschicht, die auf mindestens einer der beiden Oberflächen des Laminatkerns aufgebracht ist, wobei die Stützschicht
   - mindestens eine Lage, vorzugsweise mindestens zwei Lagen, aus textilen Flächengebilden umfasst, die jeweils einen B-Stage Binderanteil von 5-30 Gew.-% im B-Stage Zustand aufweisen, wobei sich diese Angabe auf das Gesamtgewicht der textilen Fläche mit Binder nach dessen Überführung in den B-Stage Zustand bezieht,
C) mindestens eine Klebeschicht, die auf der zum Laminatkern abgewandten Oberfläche der Stützschicht aufgebracht ist, wobei die Klebeschicht
   - mindestens eine Lage, vorzugsweise mindestens zwei Lagen, aus textilem Flächengebilden umfasst, die einen B-Stage Binderanteil von 40-80 Gew.-% im B-Stage Zustand aufweist, wobei sich diese Angabe auf das Gesamtgewicht der textilen Fläche mit Binder nach dessen Überführung in den B-Stage Zustand bezieht,
D) mindestens eine Dekorschicht, die auf der zum Laminatkern abgewandten Oberfläche der Klebschicht aufgebracht ist, wobei die Dekorschicht mehrschichtig aufgebaut sein kann,
E) gegebenenfalls mindestens eine Schutzschicht, die auf der zum Laminatkern abgewandten Oberfläche der Dekorschicht aufgebracht ist.

In einer weiteren Ausgestaltung der Erfindung kann die Klebeschicht im oben genannten Laminat oder Laminat-Vorprodukt auch die Funktion der Dekorschicht übernehmen. Weiterer Gegenstand der vorliegenden Erfindung ist somit ein Laminat und ein Laminat-Vorprodukt, das den oben beschriebenen, symmetrisch oder asymmetrisch angeordneten Laminatkern, mindestens eine der oben beschriebenen Stützschichten, mindestens eine der oben beschriebenen Klebeschichten, die die Funktion der Dekorschicht übernimmt, und gegebenenfalls eine oben beschriebene Schutzschicht enthält.

Die Herstellung des erfindungsgemäßen Laminats erfolgt durch Heiß-Verpressung des erfindungsgemäßen Laminat-Vorproduktes, so dass ein monolithischer Verbundwerkstoff resultiert, bei dem die einzelnen Schichten mit den darüber und darunterliegenden Schichten ganz oder teilweise verschmolzen sind.

### Detaillierte Beschreibung der Erfindung

Die der Erfindung zu Grunde liegende Aufgabe besteht darin, insbesondere mechanisch sehr stabile, vorzugsweise nicht brennbare Laminate (Brennwert ≤3MJ/kg nach ISO 1716) insbesondere für die Verwendung im intensiv beanspruchten Innenbereich als auch im Außenbereich in hervorragender Qualität herzustellen. Die Aufgabe wird durch einen Mehrschichtaufbau des Laminates gelöst, das aus mehreren, mindestens jedoch aus vier unterschiedlichen Schichten besteht. Diese Schichten, die aus mehreren Lagen textiler Flächen bestehen können, weisen jeweils unterschiedliche Funktionalitäten auf und stellen in ihrer Gesamtheit das erfinderische Konzept dar. Die äußeren Schichten geben dem fertigen Laminat seine außerordentlich hohe mechanische Stabilität. Der Laminatkern, insbesondere dessen chemischer und physikalischer Aufbau sowie die äußeren dekorativen Lagen geben dem Laminat seine außerordentlich hohe Stabilität gegenüber wechselnden extremen Klimaverhältnissen.

Grundsätzliche Aufbauvarianten des Laminates bzw. des Laminat-Vorproduktes ist ein symmetrischer Aufbau, wie in Fig. 1 dargestellt, und ein asymmetrischer Aufbau. Fig 1 zeigt beispielhaft einen symmetrischen Aufbau mit einem zentralen Laminatkern (Schicht d), zwei Stützschichten (c) an den beiden Hauptflächen des Laminatkerns, zwei Klebeschichten (b) und die äußeren Dekorschichten (a2). Optional können zudem Schutzschichten (a1) auf die Dekorschichten aufgebracht sein. Außerdem können optional zwei weitere Klebeschichten (b) zwischen Laminatkern (d) und Stützschichten (c) aufgebracht sein (nicht eingezeichnet). Bei einem asymmetrischen Aufbau ist Anzahl der einzelnen Schichten und der Schichtaufbau an den beiden Hauptflächen des Laminatkerns unterschiedlich. Im Extremfall können die Schichten an einer Hauptfläche auch vollständig fehlen. Die mechanischen Festigkeiten des dargestellten Laminats steigen vom Laminatkern nach außen hin an.

Ab einer Laminatdicke von 2 mm können zur zusätzlichen Erhöhung der mechanischen Stabilität Klebeschichten auch im Laminatkern eingefügt werden.

Stützschicht und Klebeschicht bestehen jeweils aus einer, bevorzugt jedoch aus mehreren textilen Flächengebilden.

Die einzelnen Schichten bzw. textilen Flächengebilde werden mittels an sich bekannter Methoden unter Einwirkung von Druck und Temperatur zum fertigen Laminat verpresst. Die Herstellung der Kernlagen ist den im Stand der Technik der Standard-HPL Kernimprägnierung gebräuchlichen Verfahren angelehnt, weicht jedoch von diesen in bestimmten Produktionsschritten etwas ab. Abweichungen und Modifikationen der aus dem Stand der Technik bekannten Produktionsverfahren werden weiter unten detailliert beschrieben.

Bei der Auswahl der Rohstoffe für das erfinderische Laminat bzw. Laminat-Vorprodukt ist darauf zu achten, dass sich für das gesamte Laminat ein geringer Brennwert nach ISO 1716 bevorzugt von ≤ 3MJ/kg ergibt.

Bei der Auswahl der Rohstoffe für dekorative Außenlagen des Laminates sowie für massenmäßig nicht essentielle Innenlagen ist des Weiteren darauf zu achten, dass diese einen geringen Brennwert nach ISO 1716 bevorzugt von ≤ 4MJ/m² aufweisen.

### 1. Definitionen

### 1.1. Textile Fläche

Bei den eingesetzten textilen Flächengebilden handelt es sich um alle Gebilde, die aus Fasern hergestellt werden und aus denen mittels einer flächenbildenden Technik eine textile Fläche hergestellt worden ist. Bei den faserbildenden Materialien handelt es sich vorzugsweise um keramische Fasern, Mineralfasern oder Glasfasern, wobei diese auch in Form von Gemischen und Gemischen mit polymeren Fasern und Filamenten sowie Naturfasern und Kohlefasern verwendet werden können. Als textile Flächen werden Gewebe, Gelege, Gestricke, Gewirke und Vliese, vorzugsweise Vliese, verstanden.

Bei den textilen Flächen aus Mineral- und keramischen Fasern handelt es sich um Alumosilikat-, Keramik-, Dolomit- Wollastonitfasern oder aus Fasern von Vulkaniten, vorzugsweise Basalt-, Diabas- und/oder Melaphyrfasern, insbesondere Basaltfasern. Diabase und Melaphyre werden zusammengefasst als Paläobasalte bezeichnet und Diabas wird auch gerne als Grünstein bezeichnet.

### 1.2. B-Stage Binder

Einige der textilen Flächengebilde sind mit einem B-Stage-Binder versehen. Sie können jedoch auch zusätzlich mit einem zusätzlichen Standardbinder (Zusatzbinder) versehen sein (Vorverfestigung), um die erforderlichen Festigkeiten bei der Weiterverarbeitung der Flächengebilde zu gewährleisten. Als Zusatzbinder sind chemisch vernetzende und/oder thermoplastische Binder geeignet.

Die mit dem B-Stage Binder zu versehenden textilen Flächengebilde werden optional mit einem solchen Zusatzbinder vorverfestigt. Die eingesetzten Binder können gleich oder verschieden sein, müssen jedoch aus der Gruppe der zum B-Stage-Binder kompatiblen Bindersysteme ausgewählt werden.

Als B-Stage Binder werden Binder verstanden, die nur teilweise verfestigt bzw. gehärtet sind, d.h. im B-Stage Zustand vorliegen, und noch eine Endverfestigung, beispielsweise durch thermische Nachbehandlung, erfahren können. Derartige B-Stage Binder sind in US-A-5,837,620, US-A-6,303,207 und US-A-6,331,339 eingehend beschrieben. Die dort offenbarten B-Stage Binder sind auch Gegenstand der vorliegenden Beschreibung. Bei B-Stage-Bindern handelt es sich vorzugsweise um Binder auf Basis von Furfurylalkohol-Formalde-hyd-, Phenol-Formaldehyd-, Melamin-Formaldehyd-, Harnstoff-Formaldehydharzen und deren Gemische. Vorzugsweise handelt es sich um wässrige Systeme. Weitere bevorzugte Bindersysteme sind Formaldehyd-freie Binder. B-Stage Binder zeichnen sich dadurch aus, dass sie einer mehrstufigen Härtung unterworfen werden können, d. h. nach der ersten Härtung bzw. den ersten Härtungen noch eine ausreichende Binderwirkung aufweisen (B-Stage Zustand), um diese für die weitere Verarbeitung nutzen zu können. Üblicherweise werden derartige Binder nach Zusatz eines Katalysators bei Temperaturen von ca. 350F in einem Schritt gehärtet.

Zur Bildung des B-Stages werden derartige Binder ggf. nach Zusatz eines Katalysators gehärtet. Der Härtungs-Katalysator-Anteil beträgt bis zu 10 Gew.-%, vorzugsweise 0,1 bis 5 Gew.-% (bezogen auf den Gesamtbindergehalt). Als Härtungs-Katalysator sind beispielsweise Ammoniumnitrat sowie organische, aromatische Säuren, z.B. Maleinsäure und p-Toluolsulfonsäure geeignet, da dieser den B-Stage-Zustand schneller erreichen lässt. Neben Ammoniumnitrat, Maleinsäure und p-Toluolsulfonsäure sind alle Materialien als Härtungs-Katalysator geeignet, welche eine vergleichbare saure Funktion aufweisen. Zum Erreichen des B-Stages wird das mit dem Binder imprägnierte textile Flächengebilde unter Temperatureinfluss getrocknet, ohne eine Komplettaushärtung zu erzeugen. Die erforderlichen Prozessparameter sind vom gewählten Bindersystem abhängig.

Die untere Temperaturgrenze kann durch Wahl der Dauer bzw. durch Zusatz von größeren oder stärker sauren Härtungs-Katalysatoren beeinflusst werden.

Das Aufbringen des B-Stage-Binders auf das textile Flächengebilde kann mit Hilfe bekannter Methoden erfolgen. Neben Aufsprühen, Durchtränken und Einpressen kann der Binder auch mittels Beschichten oder mittels Rotationsdüsenköpfen aufgebracht werden. Weiters ist auch eine Schaumauftragung möglich.

### 2. Laminatkern

Als Laminatkern werden bei symmetrischen Laminaten die inneren bzw. bei asymmetrischen Laminaten einseitige, üblicherweise außenliegende, Kernlagen verstanden (Schichten d in Fig. 1). Auch asymmetrische Laminate mit zentral liegendem Laminatkern (nicht abgebildet) sind sinnvoll und haben besondere Eigenschaften.

Der Laminatkern im Vorprodukt besteht aus mehreren Kernlagen, wobei als Kernlagen mineralisch hochgefüllte textile Flächengebilde mit sehr geringem Harzanteil zum Einsatz kommen. Dabei werden als Trägermaterialien zur Herstellung der Kernlagen spezielle hochvoluminöse textile Flächengebilde eingesetzt. Diese Flächengebilde werden in einem Tränkverfahren mit mineralisch hochgefüllten thermisch härtbaren Natur- bzw. bevorzugt modifizierten Kunstharzen (Kernformulierung) getränkt. Die besondere Struktur der verwendeten textilen Flächengebilde, die ausgesprochen niedrige Viskosität und der besonders hohe Feststoffgehalt der Tränkformulierung begünstigen dabei eine überproportional hohe Bindemittelaufnahme der textilen Flächengebilde. Die dabei erhaltenen gefüllten Flächengebilde werden durch kontrollierte thermische Behandlung in einen reaktiven Übergangszustand (B-Stage Zustand des Binderharzes) übergeführt, welcher eine Lagerung dieses Zwischenproduktes, auch über mehrere Monate, bis zur Verpressung zum eigentlichen Laminat zulässt. Die Kernlagen bzw. der Laminatkern weist nach dieser kontrollierte thermische Behandlung einen Restwassergehalt von bis zu 8 Gew.-%, vorzugsweise bis zu 5 Gew.-%, auf.

Die Bestimmung des Restwassergehaltes erfolgt durch Probennahme und Trocknung bei 165°C (Trockenofen) bis zur Gewichtskonstanz der Probe.

Je nach gewählten textilen Flächengebilde, kann dieses, bei der Verpressung des Laminat-Vorproduktes zum fertigen Laminat, ganz oder teilweise desintegrieren, d.h. die das textile Flächengebilde bildenden Fasern verteilen sich in der Matrix aus mineralischem Füller und endverfestigtem Binder.

Durch das Verpressen bildet sich ein Laminatkern umfassend
- 3 - 17 Gew.-% organisches Binderharz,
- 45 - 85% Gew anorganische Füllstoffe und
- 10 - 25% Gew.-% anorganische und/oder organische Fasern.

Der gebildete Laminatkern hat:
- eine Dichte von mindestens 1,70 g/cm³ bestimmt gemäß EN ISO 1183-1:2004, vorzugsweise von mindestens 1,80 g/cm³,
- eine Biegefestigkeit von mindestens 35 MPa bestimmt gemäß EN ISO 178:2003, vorzugsweise von mindestens 45 MPa,
- ein Biegemodul von mindestens 7 GPa bestimmt gemäß EN ISO 178:2003, vorzugsweise von mindestens 8,5 GPa.

### 2.1. Aufbau des Laminatkernes im Laminat-Vorprodukt und Laminat

Je nach Anforderung an das fertige Laminat hinsichtlich Dicke, Gewicht und mechanische Festigkeiten besteht der Laminatkern im Vorprodukt aus 2 - 50, bevorzugt 2 - 30 Lagen der mit Kernformulierung gefüllten in den B-Stage übergeführten und, zumindest teilweise, getrockneten textilen Flächen.

Das Masseverhältnis von textiler Fläche zu Festkörpergehalt aus der Kernformulierung liegt bevorzugt bei 1:3 bis 1:9 besonders bevorzugt 1:4,5 bis 1:6.

Ab einer Laminatdicke von 2 mm können zur zusätzlichen Erhöhung der mechanischen Stabilität Klebeschichten auch im Laminatkern eingefügt werden.

Bei der Auswahl der Rohstoffe für den Laminatkern ist darauf zu achten, dass sich nach dessen Verarbeitung für das gesamte Laminat ein niedriger Brennwert nach ISO 1716 bevorzugt von ≤3MJ/kg ergibt.

Nach der Verpressung des Laminat-Vorproduktes zum fertigen Laminat liegt der vorstehend beschriebene Laminatkern - wie vorstehend beschrieben - in modifizierter Form vor. Die textilen Flächengebilde desintegrieren, ganz oder teilweise, d.h. die das textile Flächengebilde bildenden Fasern verteilen sich in der Matrix.

### 2.2. Textile Fläche (Kernlagen)

Bei den eingesetzten textilen Flächengebilden für den Laminatkern bzw. das Laminat-Vorprodukt, handelt es sich bevorzugt um Mineralfaservliese, die aus Filamenten, d.h. kontinuierlichen Fasern oder aus Stapel- bzw. Schnittfasern gebildet werden. Die durchschnittliche Länge der Stapel- bzw. Schnittfasern in erfindungsgemäß eingesetzten Vliesen aus Mineralfasern beträgt zwischen 5 und 120 mm, vorzugsweise 10 bis 90 mm. In einer weiteren Ausführungsform der Erfindung enthält das Mineralfaservlies eine Mischung aus Endlosfasern und Stapel- bzw. Schnittfasern.

Der durchschnittliche Faserdurchmesser der Mineralfasern beträgt zwischen 5 und 30 µm, vorzugsweise zwischen 8 und 24 µm, besonders bevorzugt zwischen 8 und 15µ.

Bei den textilen Flächen aus Glasfasern sind insbesondere Vliese bevorzugt. Diese werden aus Filamenten, d.h. unendlich langen Fasern oder aus Stapel- bzw. Schnittfasern aufgebaut. Die durchschnittliche Länge der Stapel- bzw. Schnittfasern beträgt zwischen 5 und 120 mm, vorzugsweise 10 bis 90 mm. In einer weiteren Ausführungsform der Erfindung enthält das Glasfaservlies eine Mischung aus Endlosfasern und Stapel- bzw. Schnittfasern.

Der durchschnittliche Durchmesser der Glasfasern beträgt zwischen 5 und 30 µm, vorzugsweise zwischen 8 und 24 µm, besonders bevorzugt zwischen 10 und 21µm.

Geeignete Glasfasern umfassen jene, die aus A-Glas, E-Glas, S-Glas, C-Glas, T-Glas oder R-Glas hergestellt wurden.

Das Flächengewicht des textilen Flächengebildes beträgt zwischen 80 und 250 g/m², vorzugsweise 100 und 200 g/m², wobei sich diesen Angaben auf ein Flächengebilde ohne Binder beziehen. Die eingesetzte textile Fläche ist mit einem chemischen Binder verfestigt und hält üblicherweise 5 Gew.-% - 20 Gew.-% des chemischen Binders, vorzugsweise eines vollständig vernetzten Melamin- oder Harnstoffbinders, insbesondere 7 Gew.-% - 15 Gew.-% wobei sich die Angabe zum Binderanteil auf das Gesamtgewicht der textilen Fläche mit Binder bezieht.

Die Porosität der eingesetzten textilen Fläche beträgt mindestens 500 I/m²sec, bevorzugt 1000 I/m²sec - 3000 I/m²sec. Die Porosität bzw. Luftdurchlässigkeit der textilen Fläche wird gemäß DIN EN ISO 9237gemessen.

Die textile Fläche kann nach jedem bekannten Verfahren hergestellt werden. Bei Glasvliesen sind dies bevorzugt das Trocken- oder Nasslegeverfahren.

### 2.3. Kernformulierung

Die textilen Flächen des Laminatkerns im Vorprodukt enthalten weiter thermisch härtbare (reaktive) Harze, Füllstoffe, weitere Additive und Hilfsstoffe (insgesamt nachfolgend Kernformulierung genannt).

Bei der erfindungsgemäßen Kernformulierung handelt es sich um eine Mischung aus nachfolgend detailliert beschriebenen Grundstoffen. Die Mischung kann durch alle bekannten Verfahren der Homogenisierung hergestellt werden. Das Massenverhältnis der einzelnen Grundstoffe der Kernformulierung ist sowohl für deren Verarbeitbarkeit im Produktionsprozess als auch für deren Funktion im Endprodukt entscheidend und wird in nachfolgender Tabelle 1 beschrieben. Bei den Angaben in Tabelle 1 handelt es sich um Gewichts-% bezogen auf die Gesamtformulierung.

**Tabelle 1**

| Inhaltsstoffe | Bevorzugter Anteilsbereich | Besonders bevorzugter Anteilsbereich |
|---|---|---|
| Reaktives Grundharz | 2-15% | 8-12% |
| Anorganische Füllstoffe | 45-80% | 50-75% |
| Wasser (zusätzliche Verdünnung) | 4-25% | 9-18% |
| Flüchtige Imprägnierhilfen | 0-15% | 4-10% |
| Wasserretentionsmittel | 0-6% | 0,2-3% |
| Anorganische Pigmente | 0-10% | |
| Hydrophobierungsmittel | 0-15% | 0,2-4% |

Die für die weitere Verarbeitung (Tränkverfahren, Laminatkernherstellung) relevanten physikalischen Daten der Kernformulierung sind in nachfolgender Tabelle 2 beschrieben. Bei den Angaben zum Festkörper handelt es sich um Gewichts-% bezogen auf die Gesamtkernformulierung.

**Tabelle 2**

| Physikalische Kennzahl | Bevorzugter Bereich | Besonders bevorzugter Bereich |
|---|---|---|
| Dichte | 1,3-2,0 g/cm³ | 1,4-1,8 g/cm³ |
| Festkörper | 55-80 % | 63-75 % |
| Viskosität | 100-500 mPas | 120-200mPas |

Die erfindungsgemäße Kernformulierung ist dadurch gekennzeichnet, dass sie eine besonders niedrige Viskosität von bevorzugt 100-500 mPas, besonders bevorzugt von 120-200 mPas, gemessen bei 25°C, und einem Festkörpergehalt von bevorzugt 55-90 Gew.%, besonders bevorzugt von 63-75 Gew.% aufweist.

Die niedrige Viskosität der Kernformulierung ist entscheidend für deren Verwendung im Prozessschritt der Einbringung in den Vliesstoff. Der besonders hohe Festkörperanteil ist vorteilhaft für eine energieeffiziente Trocknung bei der Laminatkernherstellung.

### 2.3.1. Reaktive Grundharze

Als reaktive Grundharze Harze für die Kernlagen sind prinzipiell alle thermisch härtbaren Natur- bzw. Kunstharze und Mischungen geeignet. Bevorzugt sind dies Kunstharze aus der Gruppe der duroplastisch vernetzenden Systeme, auch Kombinationen mehrerer verschiedener Harzsysteme sind sinnvoll.

Als Bindemittel kommen insbesondere, Phenol-Formaldehyd-, Melamin-Formaldehyd-, Harnstoff-Formaldehydharze und auch deren Gemische in Frage. Besonders bevorzugt sind niedrig kondensierte alkalisch katalysierte wässrige Phenolresole und deren Gemische mit stickstoffhaltigen formaldehydbasierenden Harzen.

Die verwendeten Phenolresole zeichnen sich gegenüber den anderen möglichen Bindemitteln durch ihr im ausgehärteten Zustand ausgeprägtes hydrophobes Verhalten aus. Diese Eigenschaft liefert einen vorteilhaften Beitrag zur außerordentlich hohen Stabilität des erfindungsgemäßen Laminates unter wechselnden Klimaverhältnissen insbesondere gegenüber Feuchtigkeit.

Das molare Verhältnis von Phenol zu Formaldehyd beträgt in den erfindungsgemäß verwendeten Harzen bevorzugt 1:1 bis 1:2,5; besonders bevorzugt 1:1,4 bis 1:2. Als Katalysatoren werden Amine, Alkali- und Erdalkalihydroxide verwendet. Bevorzugt wird Natriumhydroxid verwendet. Die Katalysatorkonzentration liegt zwischen 5 und 200 mmol/ mol Phenol bevorzugt zwischen 10 und 60 mmol/ mol Phenol.

Die erfindungsgemäß verwendeten Phenolharze sind wässrige oder wässrigmethanolische Systeme mit einem Harzfestkörpergehalt von 35-80% bevorzugt mit 45-70%. Der Methanolgehalt liegt bei 0-20% bevorzugt bei 5-15%. Der Wassergehalt liegt bei 20-65% bevorzugt bei 25-40%. Die Wasserverdünnbarkeit der verwendeten Harze liegt bei 1:0,5 bis 1:4 bevorzugt zwischen 1:0,8 und 1:2 in Masseteilen. Die Viskosität der Grundharze beträgt 50-2000 mPas bevorzugt bei 100-300 mPas gemessen an einem Brookfield Spindelrheometer bei 25°C.

### 2.3.2. Füllstoffe

Als Füllstoffe kommen alle nichtbrennbaren anorganischen Füllstoffe in Frage, wobei deren Korngrößenverteilung so zu wählen ist, dass eine Einbringung ins Bindemittelsystem sowie in das zu tränkende textile Flächengebilde gewährleistet wird. Geeignete Füllstoffe sind insbesondere mineralische Füllstoffe, vorzugsweise alle Erdalkalicarbonate in ihren unterschiedlichen natürlichen und künstlichen Erscheinungsformen, Magnesiumhydroxid, Aluminiumhydroxid, Kaolin, Talkum, Titandioxid, alle künstlich hergestellten und natürlichen vorkommenden Silikate und deren Mischungen.

Bevorzugte Füllstoffe sind natürlich vorkommende Calziumcarbonate mit einem mittleren Partikeldurchmesser zwischen 1 und 100 µm, besonders bevorzugt zwischen 2 und 20 µm. Besonders bevorzugt sind natürlich vorkommende gemahlene Kreiden. Aufgrund ihrer Partikelgeometrie (weiche agglomerierte abgerundete Partikel mit einer primären Kristallitgröße von 1 µm) sind Kreiden besonders dafür geeignet, auch bei hohen Füllstoffgehalten niedrigviskose Formulierungen zu erhalten. Die Viskosität der Kernformulierung wird dadurch besonders positiv beeinflusst und auch bei Füllstoffgehalten > 75% werden niedrigviskose, leicht imprägnierbare Kernformulierungen erhalten, was für das erfindungsgemäße Laminat und besonders für das Herstellungsverfahren des Laminatkernes essenziell ist. Diese besondere Eigenschaft der Kernformulierung ermöglicht ihre Einbringung in die beschriebenen textilen Flächengebilde, insbesondere Vliese, bei hohen Produktionsgeschwindigkeiten.

### 2.3.3. Additive

Als Verdünnungsmedien sind Wasser und alle mit Wasser mischbaren Lösungsmittel, insbesondere Alkohole, geeignet. Hierbei ist es von Vorteil, wenn die mit Wasser mischbaren Lösungsmittel einen Dampfdruck bei 20°C aufweisen, der größer ist als der von Wasser.

Als Verdünnungsmedien besonders bevorzugt sind Wasser und Methanol. Bevorzugte und besonders bevorzugte Gehalte dieser Stoffe sind unter Punkt "Wasser" und "flüchtige Imprägnierhilfen" in Tabelle 1 beschrieben.

Als Hilfsstoffe zur Flüssigkeitsretention und Vliespenetration sind ähnliche Stoffe geeignet wie sie auch in der Papierindustrie zur Herstellung von Streichfarben verwendet werden. Bevorzugt sind sowohl künstlich hergestellte polare Polymere wie Polyvinylalkohole, als auch modifizierte natürliche Polymere auf Basis von Cellulose und Stärke und deren wässrige Lösungen sowie Bentonit. Besonders bevorzugt sind wässrige Lösungen von niedermolekularen Carboxymethylcellulosen. Bevorzugte und besonders bevorzugte Gehalte dieser Stoffe sind unter Punkt "Wasserretentionsmittel" in Tabelle 1 beschrieben.

Als Hilfsstoffe zur zusätzlichen Verbesserung der Feuchtestabilität des Laminatkernes können Hydrophobierungsmittel eingesetzt werden. Unter dem Begriff Hydrophobierungsmittel werden im erfindungsgemäßen Sinn alle natürlichen und künstlich hergestellten Verbindungen verstanden, welche dem Endprodukt (Laminatkern) ausgeprägte apolare und wasserabweisende Eigenschaften verleihen. Bevorzugt verwendete Hydrophobierungsmittel sind verzweigte und unverzweigte, fluorierte und nichtfluorierte langkettige paraffinartige Kohlenwasserstoffe, Fette, Öle, Wachse, Silikonharze. Alle genannten Verbindungen können in ihrer reinen Form sowie als Suspensionen oder Emulsionen in Wasser und auch als Mischungen erfindungsgemäßen Einsatz finden. Besonders bevorzugt werden zur zusätzlichen Hydrophobierung des Laminatkerns Silikonharze eingesetzt. Bevorzugte und besonders bevorzugte Gehalte dieser Hilfsstoffe sind unter Punkt "Hydrophobierungmittel" in Tabelle 1 beschrieben.

Zur Einfärbung des Laminatkernes können Pigmente und Farbstoffe aller Art eingesetzt werden. Eine Einfärbung des Laminatkernes bringt den Vorteil, dass Beschädigungen an den Laminatkanten durch beabsichtigte (Sägen, Fräsen) und unbeabsichtigte mechanische Beanspruchung (Stoßbeanspruchung) optisch weniger deutlich hervortreten und das Laminat weiterhin herausragende optische Güte besitzt. Bevorzugt werden zur Kernfärbung Metalloxidpigmente verwendet, besonders bevorzugt Eisenoxidpigmente. Bevorzugte und besonders bevorzugte Gehalte dieser Hilfsstoffe sind unter Punkt "Anorganische Pigmente" in Tabelle 1 beschrieben.

### 2.3.4. Tränkverfahren

Zur Einbringen der Kernformulierung in das textile Flächengebilde können alle bekannten Verfahren des Standes der Technik verwendet werden. Besonders geeignet ist Tränken der textilen Flächengebilde in der Kernformulierung durch Eintauchen und anschließendes Entfernen der überschüssigen Kernformulierung durch ein Walzen oder Rakeldosierwerk wie es aus dem Stand der Technik der Papierimprägnierung der HPL-Herstellung in horizontalen bzw. vertikalen Imprägnieranlagen bekannt ist. Auf diese Weise ist die genaue Einstellung des Kernlagenendgewichtes sowie des genauen Gewichtsverhältnisses zwischen textilem Flächengebilde und Kernformulierung einfach möglich. Die Zusammensetzung des Laminatkernes wird so eingestellt, dass eine ausreichende und gleichmäßige Penetration der textilen Fläche erreicht wird. Des Weiteren ist das Verhältnis aus brennbaren und nichtbrennbaren Stoffen im Laminatkern darauf abgestimmt im Gesamtprodukt einen sehr niedrigen Brennwert nach ISO 1716 bevorzugt von ≤3 MJ/kg zu erreichen.

Die Trocknung der mit dem Kernmaterial beaufschlagten textilen Fläche erfolgt mittels üblicher Methoden durch kontrollierte thermische Behandlung. Dabei wird wie im Prozess der HPL Kernpapierimprägnierung das Bindemittel nur teilweise vernetzt und somit in einen reaktiven Übergangszustand übergeführt, welcher eine Lagerung dieses Zwischenproduktes bis zur Verpressung zum eigentlichen Laminat auch über mehrere Monate Lagerzeit zulässt.

Die genaue Einstellung der Reaktivität des Übergangszustandes erfolgt über Messung der aus dem Stand der Technik der HPL Produktion übernommenen Parameter Masseauftrag Formulierung, Restfeuchtegehalt, Auspressung/Fluss. Die Kernlagen bzw. der Laminatkern weist nach dieser kontrollierten thermischen Behandlung einen Restwassergehalt von bis zu 8 Gew.-%, vorzugsweise bis zu 5 Gew.-%, auf. Die Bestimmung des Restwassergehaltes erfolgt durch Probennahme und Trocknung bei 165°C (Trockenofen) bis zur Gewichtskonstanz der Probe.

### 3. Stützschicht

Als Stützschicht werden die textilen Flächen bezeichnet, die sich auf beiden Seiten des Laminatkerns (für symmetrische Laminate) bzw. auf einer Seite des Laminatkerns (asymmetrische Laminate) befindet (Fig. 1, c). Diese Schicht besteht aus speziellen niedrig beharzten textilen Flächen, die zum Ausgleich der unregelmäßigen Strukturen aus dem Laminatinneren dienen und die Festigkeit und mechanischen Werte des Laminats drastisch erhöhen. Für die Stützschicht werden Binder verwendet, die in den B-Stage-Zustand überführt werden können.

### 3.1. Textile Fläche (Stützschicht)

Bei den eingesetzten textilen Flächengebilden für die Stützschicht handelt es sich vorzugsweise um Mineralfaservliese, die aus Filamenten, d. h. kontinuierlichen Fasern oder aus Stapel- bzw. Schnittfasern gebildet werden. Die durchschnittliche Länge der Stapel- bzw. Schnittfasern im erfindungsgemäß eingesetzten Vlies aus Mineralfasern beträgt zwischen 5 und 120 mm, vorzugsweise 10 bis 90 mm. In einer weiteren Ausführungsform der Erfindung enthält das Mineralfaservlies eine Mischung aus Endlosfasern und Stapel- bzw. Schnittfasern.

Der durchschnittliche Faserdurchmesser der Mineralfasern beträgt zwischen 5 und 30 µm, vorzugsweise zwischen 8 und 24 µm, besonders bevorzugt zwischen 8 und 15µ.

Bei den textilen Flächen aus Glasfasern sind insbesondere Vliese bevorzugt. Diese werden aus Filamenten, d. h. kontinuierlichen Fasern (Endlosfasern) oder aus Stapel- bzw. Schnittfasern aufgebaut. Die durchschnittliche Länge der Stapel- bzw. Schnittfasern beträgt zwischen 5 und 120 mm, vorzugsweise 10 bis 90 mm. In einer weiteren Ausführungsform der Erfindung enthält das Glasfaservlies eine Mischung aus Endlosfasern und Stapel- bzw. Schnittfasern.

Der durchschnittliche Durchmesser der Glasfasern beträgt zwischen 5 und 30 µm, vorzugsweise zwischen 8 und 24 µm, besonders bevorzugt zwischen 10 und 21µm.

Geeignete Glasfasern umfassen jene, die aus A-Glas, E-Glas, S-Glas, C-Glas, T-Glas oder R-Glas hergestellt wurden.

Optional enthält die textile Fläche eine zusätzliche Verstärkung zur Erhöhung der Festigkeit und der mechanischen Eigenschaften. Bevorzugt ist diese Verstärkung eine Längsfädenverstärkung oder eine Gelegeverstärkung, d. h., Verstärkungsfäden sind in die textile Fläche eingebracht. Bevorzugt sind die Verstärkungsfäden Glasfilamente oder Glasfaserrovings, die als parallele Fadenschar oder in Form eines Glasfasergeleges in die textile Fläche eingebracht wurden.

### 3.2. B-Stage Binder

Die textilen Flächengebilde für die Stützlagen sind mit einem B-Stage-Binder versehen. Die textile Fläche (Stützschicht) enthält vorzugsweise keinen Zusatzbinder. Optional kann die textile Fläche maximal 5 Gew.-% eines Zusatzbinders enthalten.

Das eingesetzte textile Flächengebilde für die Stützlagen im Laminat-Vorprodukt weist vorzugsweise mindestens einen Binder im B-Stage-Zustand auf, im fertigen Laminat ist dieser endverfestigt.

Das Flächengewicht des textilen Flächengebildes für die Stützlage beträgt zwischen 140 und 600 g/m², vorzugsweise 200 und 300 g/m², wobei sich diesen Angaben auf ein Flächengebilde ohne B-Stage-Binder beziehen. Die textile Fläche enthält 5 Gew.-% - 30 Gew.-% eines B-Stage-Binders, vorzugsweise 15 Gew.-% - 25 Gew.-% wobei sich die Angabe zum Binderanteil auf das Gesamtgewicht der textilen Fläche mit Binder und nach Überführung in den B-Stage-Zustand bezieht.

Die textile Fläche kann nach jedem bekannten Verfahren hergestellt werden. Bei Glasvliesen sind dies bevorzugt das Trocken- oder Nasslegeverfahren.

### 4. Klebeschicht

Als Klebeschicht werden die textilen Flächen bezeichnet, die sich auf den o. g. Stützlagen befinden (Fig. 1, b). Diese Schichten bestehen aus speziellen hoch beharzten textilen Flächen, die zur Haftvermittlung zwischen den äußeren Laminatlagen und den weiter innenliegenden Lagen dienen. Wesentliche Funktion dieser Lagen ist der Ausgleich von strukturellen Unregelmäßigkeiten aus dem Laminatinneren, sodass diese nicht an die Laminatoberfläche durchdringen und die Oberfläche beeinträchtigen können. Diese Schichten leisten zudem einen essenziellen Beitrag zur Festigkeit des Gesamtlaminates, zur Erhöhung der mechanischen Werte und Beanspruchbarkeit des Laminats sowie Schutz der der weiter innen liegenden Lagen vor Feuchtigkeit. Die textilen Flächen der Klebeschicht enthalten B-Stage Binder. Dieser liegt im Laminat-Vorprodukt im B-Stage Zustand vor und im fertigen Laminat ist dieser endverfestigt.

Die Klebeschicht erzeugt aufgrund des dynamischen Fließverhaltens des Binders beim Laminieren einen Bindergradienten im Bauteil. Dadurch ergibt sich ein verbesserter Verbund der einzelnen Laminatschichten an deren Grenzflächen und somit hervorragende mechanische Eigenschaften des Laminates.

### 4.1. Textile Fläche (Klebeschicht)

Bei den eingesetzten textilen Flächengebilden für die Klebeschicht handelt es sich bevorzugt um Mineralfaservliese, die aus Filamenten, d. h. kontinuierlichen Fasern oder aus Stapel- bzw. Schnittfasern gebildet werden. Die durchschnittliche Länge der Stapel- bzw. Schnittfasern im erfindungsgemäß eingesetzten Vlies aus Mineralfasern beträgt zwischen 5 und 120 mm, vorzugsweise 10 bis 90 mm. In einer weiteren Ausführungsform der Erfindung enthält das Mineralfaservlies eine Mischung aus Endlosfasern und Stapel- bzw. Schnittfasern.

Der durchschnittliche Faserdurchmesser der Mineralfasern beträgt zwischen 5 und 30 µm, vorzugsweise zwischen 8 und 24 µm, besonders bevorzugt zwischen 8 und 15µ.

Bei den textilen Flächen aus Glasfasern sind insbesondere Vliese bevorzugt. Diese werden aus Filamenten, d. h. unendlich langen Fasern oder aus Stapel- bzw. Schnittfasern aufgebaut. Die durchschnittliche Länge der Stapel- bzw. Schnittfasern beträgt zwischen 5 und 120 mm, vorzugsweise 10 bis 90 mm. In einer weiteren Ausführungsform der Erfindung enthält das Glasfaservlies eine Mischung aus Endlosfasern und Stapel- bzw. Schnittfasern.

Der durchschnittliche Durchmesser der Glasfasern beträgt zwischen 5 und 30 µm, vorzugsweise zwischen 8 und 24 µm, besonders bevorzugt zwischen 10 und 21µm.

Geeignete Glasfasern umfassen jene, die aus A-Glas, E-Glas, S-Glas, C-Glas, T-Glas oder R-Glas hergestellt wurden.

### 4.2. B-Stage Binder (Klebeschicht)

Die textilen Flächengebilde für die Klebelagen sind mit einem B-Stage-Binder versehen. Sie sind vorzugsweise zusätzlich mit einem Standardbinder zur Vorverfestigung versehen, um die erforderlichen Festigkeiten bei der Weiterverarbeitung der Flächengebilde zu gewährleisten. Der zusätzliche Binderanteil (Zusatzbinder) beträgt maximal 35 Gew.-%, vorzugsweise 7 bis 27 Gew.-%, wobei sich diese Angabe nur auf das Gesamtgewicht der textilen Fläche ohne Binder bezieht.

Das eingesetzte textile Flächengebilde für die Stützlagen im Laminat-Vorprodukt weist vorzugsweise mindestens einen Binder im B-Stage-Zustand auf, im fertigen Laminat ist dieser endverfestigt.

Das Flächengewicht des textilen Flächengebildes für die Klebelage beträgt zwischen 25 und 500 g/m², vorzugsweise 30 und 70 g/m², wobei sich diese Angaben auf ein Flächengebilde ohne B-Stage-Binder jedoch mit dem gegebenenfalls vorhandenen Zusatzbinder beziehen. Die textile Fläche enthält 40 Gew.-% - 80 Gew.-% eines B-Stage Binders, vorzugsweise 50 Gew.-% - 65 Gew.% wobei sich die Angabe zum Binderanteil auf das Gesamtgewicht der textilen Fläche mit Binder und nach Überführung in den B-Stage-Zustand bezieht.

Vorzugsweise ist das Gesamtflächengewicht (Summe der einzelnen textilen Flächen) der für die Klebeschicht verwendeten textilen Flächen um min. 20% geringer als das Gesamtflächengewicht der für die Stützlage eingesetzten textilen Flächengebilden.

Die textile Fläche kann nach jedem bekannten Verfahren hergestellt werden. Bei Glasvliesen sind dies bevorzugt das Trocken- oder Nasslegeverfahren. Aufgrund der besseren Oberflächenqualität ist das Nasslegeverfahren bevorzugt.

Je nach Anforderung an das Laminat hinsichtlich der mechanischen Anforderungen besteht die Klebeschicht aus 1 - 2 Lagen der textilen Flächen jeweils an der Oberfläche der Stützschicht (d. h. bei symmetrischem Aufbau 2 - 4 Lagen).

### 5. Dekorschicht

Die äußeren Schichten (a2 in Fig. 1) dienen zur Optimierung der Oberfläche einschließlich Oberflächengüte und farblichen Gestaltung. Dabei können als äußerste Lagen (a2 in Fig 1) alle Arten natur- und kunstharzimprägnierter Papiere und textile Flächengebilde (Vliese, Gewebe) eingesetzt werden. Als Papiere kommen dafür insbesondere Kraftpapiere, Dekorpapiere, Druckbasispapiere, Overlaypapiere, Seidenpapiere, Baumwollpapiere oder Recyclingpapiere in Frage. Die Dekorschicht kann weiterhin bestimmte Funktionsmaterialien beinhalten, die auch optische Spezialeffekte umfassen können.

Bei der Auswahl der Rohstoffe für dekorative Außenlagen des Laminates ist darauf zu achten, dass diese einen niedrigen Brennwert nach ISO 1716 bevorzugt von ≤ 4MJ/m² aufweisen.

### 5.1. Dekorpapiere

In einer bevorzugten Ausgestaltung werden saugfähige Dekorpapiere verwendet. Solche Dekorpapiere sind im Stand der Technik aus der HPL Produktion bekannt und sind entweder einfärbig oder mit dekorativen Drucken versehen. Das Flächengewicht des Dekorpapiers liegt zwischen 25 g/m² - 140g/m² bevorzugt zwischen 60 und 120g/m². Die hohe Saugfähigkeit ist für eine rasche und regelmäßige Durchtränkbarkeit durch den dafür eingesetzten B-stage Binder notwendig.

### 5.2. Textile Flächengebilde (Dekor)

In einer weiteren bevorzugten Ausgestaltung werden für die Dekorschicht textile Flächengebilde, insbesondere Gewebe oder Vliese verwendet.

In einer bevorzugten Ausführung ist die Dekorlage ein Mineral- oder Glasfaservlies. Das Mineralfaservlies kann aus Filamenten, d. h. kontinuierlichen Fasern oder aus Stapel- bzw. Schnittfasern gebildet werden. Die durchschnittliche Länge der Stapel- bzw. Schnittfasern im erfindungsgemäß eingesetzten Vlies aus Mineralfasern beträgt zwischen 5 und 120 mm, vorzugsweise 10 bis 90 mm. In einer weiteren Ausführungsform der Erfindung enthält das Mineralfaservlies eine Mischung aus Endlosfasern und Stapel- bzw. Schnittfasern.

Der durchschnittliche Faserdurchmesser der Mineralfasern beträgt zwischen 5 und 30 µm, vorzugsweise zwischen 8 und 24 µm, besonders bevorzugt zwischen 8 und 15µ.

Bei den textilen Flächen aus Glasfasern sind insbesondere Vliese bevorzugt. Diese werden aus Filamenten, d. h. unendlich langen Fasern oder aus Stapel- bzw. Schnittfasern aufgebaut. Die durchschnittliche Länge der Stapel- bzw. Schnittfasern beträgt zwischen 5 und 120 mm, vorzugsweise 10 bis 90 mm. In einer weiteren Ausführungsform der Erfindung enthält das Glasfaservlies eine Mischung aus Endlosfasern und Stapel- bzw. Schnittfasern.

Der durchschnittliche Durchmesser der Glasfasern beträgt zwischen 5 und 30 µm, vorzugsweise zwischen 8 und 24 µm, besonders bevorzugt zwischen 10 und 21µm.

Geeignete Glasfasern umfassen jene, die aus A-Glas, E-Glas, S-Glas, C-Glas, T-Glas oder R-Glas hergestellt wurden.

Die textilen Flächen aus Mineral- und / oder Glasfasern, insbesondere die Vliesstoffe aus diesen Materialien, können auch bedruckt sein bzw. werden. Die Bedruckung der textilen Fläche kann mit bekannten Methoden erfolgen.

### 5.3. B-Stage Binder Dekorpapiere

Als B-Stage Binder für Dekorpapiere kommen alle aus dem Stand der Technik der HPL Herstellung bekannten Bindemittel und Härtersysteme in Frage.

### 5.4. B-Stage Binder Dekor - weitere textile Flächengebilde

Die textilen Flächengebilde für die Dekorlage sind mit einem B-Stage-Binder versehen. Sie sind bevorzugt mit einem Zusatzbinder versehen, um die erforderlichen Festigkeiten bei der Weiterverarbeitung der Flächengebilde zu gewährleisten. Der zusätzliche Binderanteil (Zusatzbinder) beträgt maximal 30 Gew.-%, vorzugsweise 7 bis 27 Gew.-%.

Das eingesetzte textile Flächengebilde für die Dekorlage im Laminat-Vorprodukt weist vorzugsweise mindestens einen Binder im B-Stage-Zustand auf, im fertigen Laminat ist dieser endverfestigt.

Das Flächengewicht des textilen Flächengebildes für die Dekorlage beträgt zwischen 30 und 250 g/m², vorzugsweise 40 und 70 g/m², wobei sich diesen Angaben auf ein Flächengebilde ohne B-Stage-Binder jedoch mit dem gegebenenfalls vorhandenen Zusatzbinder beziehen. Die textile Fläche enthält 30 Gew.-% - 70 Gew.-% eines B-Stage Binders, vorzugsweise 50 Gew.-% - 60 Gew.% wobei sich die Angabe zum Binderanteil auf das Gesamtgewicht der textilen Fläche mit Binder bezieht.

Die textile Fläche kann nach jedem bekannten Verfahren hergestellt werden. Bei Glasvliesen sind dies bevorzugt das Trocken- oder Nasslegeverfahren.

### 5.5. Funktionsmaterialien (Dekor)

Neben den vorstehend genannten Merkmalen kann die erfindungsgemäße Dekorschicht noch weitere Ausrüstungen mit Funktionsmaterialien aufweisen. Hierzu wird ein auf die Oberseite des mit dem B-Stage-Binder ausgerüsteten textilen Flächengebildes aufgebrachtes oder in das textile Flächengebilde eingebrachtes Funktionsmaterial eingesetzt.

Bei dem erfindungsgemäß eingesetzten Funktionsmaterial handelt es sich um Flammschutzmittel, Materialien zur Steuerung von elektrostatischen Aufladungen, Materialien zur Abschirmung elektromagnetischer Strahlung, Materialien zur Erhöhung der Abriebfestigkeit und Oberflächenhärte, insbesondere jedoch um organische oder inorganische Pigmente, insbesondere farbige Pigmente, Effektpigmente oder elektrisch leitfähige Pigmente bzw. Partikel.

In einer Variante des Verfahrens wird ein zusätzlicher Binder zur Fixierung der Funktionsmaterialien auf dem textilen Flächengebilde zugesetzt. Hierbei wird vorzugsweise der gleiche Binder (B-Stage Binder), wie er im textilen Flächengebilde vorliegt, gewählt. Der Gehalt an Funktionsmaterial wird durch die nachfolgende Verwendung bestimmt.

Bei den Flammschutzmitteln handelt es sich anorganische Flammschutzmittel, Organophosphor-Flammschutzmittel, Stickstoff basierte Flammschutzmittel oder Intumeszenz Flammschutzmittel. Halogenierte (bromierte und chlorierte) Flammschutzmittel sind ebenfalls einsetzbar, aufgrund ihrer Risikobewertung jedoch weniger bevorzugt. Beispiele für derartige halogenierte Flammschutzmittel sind polybromierte Diphenylether, z. B. DecaBDE, Tetrabrombisphenol A und HBCD (Hexabromocyclododecan).

Bei den Materialien zur Abschirmung von elektromagnetischer Strahlung handelt es sich üblicherweise um elektrisch leitfähige Materialien. Diese können in Form von Folien, Partikeln, Faser, bzw. Drähten, und/oder textilen Flächengebilden aus den vorstehend genannten Materialien aufgebaut sein.

Durch Verwendung von Mitteln zur Erhöhung bzw. Steuerung der elektrischen Leitfähigkeit können Antistatikeffekte erzielt werden bzw. die Eigenschaften für die Pulverlackierung eingestellt werden. Bei diesen Mitteln handelt es sich üblicherweise um Partikel, welche elektrisch leitfähig sind. Geeignete Materialien sind elektrisch leitfähige Kohlenstoffe wie Ruß, Graphit und Kohlenstoff-Nano-Röhrchen (C-Nanotubes), leitfähige Kunststoffe oder Fasern bzw. Partikel aus Metall oder Metallbestandteilen. Neben diesen können auch leitfähige organische Harze, wie Phenolharze, oder anorganische bzw. organische Salze eingesetzt. Derartige Zusätze sind bereits aus DE-A-3639816 bekannt. Weiterhin können auch die in DE-A-10232874 und EP-A-1659146 offenbarten Salze, insbesondere Alkali- bzw. Erdalkalisalze, wie Lithiumnitrat und Natriumnitrat, eingesetzt werden. Die vorstehend genannten Materialien sollten allerdings zu den ändern Materialien kompatibel sein.

Durch die Verwendung von Mitteln zur Erhöhung bzw. Steuerung der elektrischen Leitfähigkeit wird der Oberflächenwiderstand des erfindungsgemäßen Verbundwerkstoffes reduziert. Es hat sich gezeigt, dass erfindungsgemäße Verbundwerkstoffe mit einem Oberflächenwiderstand von bis zu 10¹⁰ Ω (Ohm), vorzugsweise von bis zu 10⁸ Ω (Ohm) sehr gut für Pulverlackierungen geeignet sind.

Zur Erhöhung der Abriebeigenschaften und Kratzbeständigkeit werden vorzugsweise SiC und/oder SiO₂ Partikel oder ähnliche Materialien verwendet. Für die Oberflächenvergütung zur Verbesserung der Abrasion und Härte werden typischerweise Korngrößen von unter 1 mm verwendet, wodurch eine sehr harte Oberfläche erzeugt werden kann.

Der Anteil der Funktionsmaterialien in der Dekorschicht beträgt 0 Gew.-% - 15 Gew.-%, bevorzugt 1 Gew.-% - 15 Gew.-%, bezogen auf das Gesamtgewicht des textilen Flächengebildes.

### 5.6. Alternative Dekorfunktionen

In einer weiteren bevorzugten Ausführungsform kann auch die erfindungsgemäße Klebeschicht Ausrüstungen mit Funktionsmaterialien aufweisen. Hierzu wird ein auf die Oberseite des mit dem B-Stage-Binder ausgerüsteten textilen Flächengebildes aufgebrachtes oder in das textile Flächengebilde eingebrachtes Funktionsmaterial eingesetzt.

Bei dem erfindungsgemäß eingesetzten Funktionsmaterial handelt es sich insbesondere um Materialien zur Steuerung von elektrostatischen Aufladungen, jedoch sind auch die oben erwähnten Flammschutzmittel, Materialien zur Abschirmung elektromagnetischer Strahlung, Materialien zur Erhöhung der Oberflächenhärte und Pigmente grundsätzlich einsetzbar.

In einer Variante des Verfahrens wird ein zusätzlicher Binder zur Fixierung der Funktionsmaterialien auf dem textilen Flächengebilde zugesetzt. Hierbei wird vorzugsweise der gleiche Binder (B-Stage Binder) wie er im textilen Flächengebilde vorliegt gewählt. Der Gehalt an Funktionsmaterial wird durch die nachfolgende Verwendung bestimmt.

Das Einbringen von Funktionsmaterialien in die Klebeschicht kann die Eigenschaften und Wirkungen der außen liegenden Dekorschicht verbessern. Insbesondere kann bei Verwendung von Mitteln zur Erhöhung bzw. Steuerung der elektrischen Leitfähigkeit in der Klebeschicht eine Pulverlackierung direkt auf die Klebeschicht erfolgen. In diesem Fall wird die Dekorschicht auf die Pulverlackierung aufgebracht.

In einer weiteren bevorzugten Ausführungsform wird eine Pulverlackierung direkt auf die Klebeschicht aufgebracht und auf eine separate äußere Dekorschicht teilweise oder gänzlich verzichtet. In diesem Fall übernimmt die Klebeschicht teilweise oder vollständig die Funktion der Dekorschicht.

### 5.7. Schutzschicht

Abhängig vom Einsatzbereich des Endproduktes kann die äußerste Lage optional zusätzlich mit unterschiedlichen Schutzschichten beaufschlagt werden (Fig. 1, Lage a1). Als Schutzschichten eignen sich insbesondere sowohl strahlenhärtbare als auch thermisch aushärtbare Systeme wie sie in WO97/49746 beschrieben werden. Als chemische Basis für diese Schutzschichten kommen Polykondensations-, Polyadditions- und Polymerisationssysteme in Frage, bevorzugt sind dies Polymerisationssysteme. Die Ausrüstung mit derlei Zusatzbeschichtungen führt zu besonders hochwertigen Produkten, welche insbesondere für den von Sonne, Wind und Wetter geprägten Außenbereich geeignet sind. Diese Produkte zeichnen sich durch eine außergewöhnliche Bewitterungsstabilität und besonders geringe Feuchteempfindlichkeit der dekorativen Oberflächen aus.

Bei der Auswahl der Rohstoffe für die beschriebene Schutzschicht ist darauf zu achten, dass Ihr Brennwert nach ISO 1716 gering ist und bevorzugt ≤ 4MJ/m² und Lage beträgt, und sich für das gesamte Laminat ein geringer Brennwert nach ISO 1716 bevorzugt von ≤ 3MJ/kg ergibt.

### 6. Herstellverfahren

Das erfindungsgemäße feuerfeste Laminat wird hergestellt durch Verpressung der oben beschriebenen einzelnen Lagen in den oben beschriebenen Aufbauvariationen.

Die Verpressung aller Lagen des Laminat-Vorprodukts (Fig. 1, Lagen a-d) kann sowohl in Ein- bevorzugt Mehretagenpressen erfolgen wie sie aus dem Stand der Technik der Laminatherstellung bekannt sind. Die anzuwendenden Pressdrucke und Temperaturen liegen in den für Technische- und Dekorative Laminate üblicherweise eingestellten Bereichen. Hierbei findet auch die Endverfestigung der im B-Stage Zustand vorliegenden Binder statt.

Erfindungsgemäß werden die oben beschriebenen besonderen Eigenschaften des Laminats durch dessen Mehrschichtaufbau und insbesondere durch dessen stabilitätserzeugende äußere Lagen erreicht. Die nach der Herstellung (Verpressung bei erhöhtem Druck und Temperatur) erhaltene monolithische Struktur (die zuvor übereinanderliegenden Lagen verschmelzen zu einem untrennbar verbundenen System) weist in den äußeren Bereichen höhere Festigkeiten auf als im Laminatkern, wobei diese als Gradient der mechanischen Werte von außen (höher) nach innen (niedriger) zu verstehen ist. Funktionell ist dies mit einem Stahl Doppel T Träger vergleichbar, welcher seine Stabilität durch eine ähnliche spezielle Konstruktion erlangt.

In Fig. 1 werden zusätzlich die Festigkeitsverhältnisse innerhalb des fertigen Laminats dargestellt. Die Ergebnisse wurden durch Vergleichsmessungen unterschiedlicher Laminataufbauten (mit und ohne Verstärkungs- und Stützschichten) erhalten und zeigen deutlich höhere Festigkeit in den äußeren Laminatbereichen. Dieser Festigkeitsgradient im erfindungsgemäß hergestellten Laminat ist ein wesentlicher Vorteil der Erfindung.

Nach dem Verpressen der einzelnen Schichten ergibt sich ein monolithischer Werkstoff mit einem Festigkeitsgradienten von außen (dekorseitig) nach innen (kernseitig).

Des Weiteren wird durch diesen besonderen Aufbau das Eindringen von Feuchtigkeit über die Laminataußenflächen in den Kern verhindert. Platten mit erhöhter Feuchtestabilität sind das Resultat.

Darüber hinaus zeigen die erfindungsgemäßen Laminate eine besonders gute Biegefestigkeit von vorzugsweise mindestens 40 MPa, insbesondere von mindestens 45 MPa, besonders bevorzugt von mindestens 50 MPa, insbesondere bevorzugt mindestens 55 MPa, bestimmt gemäß EN ISO 178:2003 (Querrichtung).

Zusätzlich zeigen die erfindungsgemäßen Laminate ein besonders gutes Biegemodul von vorzugsweise mindestens 8,5 GPa, insbesondere bevorzugt von mindestens 9 GPa, bestimmt gemäß EN ISO 178:2003 (Querrichtung).

Des Weiteren wird durch diesen besonderen Aufbau eine besonders hochwertige, optisch ansprechende Laminatoberfläche erhalten, welche sich deutlich von jenen, dem Stand der Technik entsprechenden, Oberflächen unterscheidet.

### 7. Verwendung

Die aus dem erfindungsgemäßen Laminat-Vorprodukt hergestellten Laminate eignen sich zur Herstellung von Oberflächen im Innen oder Außenbereich von Bauwerken.

Die zunehmende Verschärfung der Vorschriften zur Brandverhütung schränkt die Anwendungsgebiete von brennbaren Baustoffen, insbesondere in Außenanwendungen, zusehends ein. Das schleppende Voranschreiten der Harmonisierung der Bauordnungen fördert zusätzlich die Anhebung der Sicherheitsvorschriften. Für die Verkleidung von Fassaden an Gebäuden, deren Höhe die Hochhausgrenze überschreitet, sind in den meisten Ländern unbrennbare Baustoffe vorgeschrieben. Deshalb werden diese Gebäude zumeist mit Fassadenelementen aus Glas, Metall oder Stein ausgeführt. Architekten fordern immer stärker Fassadenelemente mit natürlichen Oberflächen, z.B. wie die von HPL, um eine Alternative anbieten zu können. HPL werden zur Verkleidung von Gebäuden als vorgehängte, hinterlüftete Fassade ausgeführt. Dabei ist die Wärmedämmung von der eigentlichen Fassadenverkleidung durch einen Luftspalt getrennt, der die kontinuierliche Abführung von Feuchtigkeit im Hinterlüftungsspalt gewährleistet. Feuchtigkeit kann deshalb aus dem Gebäude ungehindert entweichen, die Dämmung bleibt trocken und funktionsfähig, die Schimmelbildung wird verhindert.

Im Innenbereich wurden die Vorschriften bei Wandverkleidung in Krankenhäusern, Pflegeheimen, Schulen, öffentlichen Gebäuden, Flughäfen, insbesondere in Fluchtwegen, verschärft. Ziel ist, im Brandfall eine vollständige Evakuierung des Gebäudes zu gewährleisten, selbst wenn wie im Falle von z.B. Krankenhäusern mit verlängerten Evakuierungszeiten zu rechnen ist. Auch hier geht jedoch der Gestaltungstrend weg von sterilen Beton- und Glasflächen hin zu natürlichen oder individuellen Oberflächen. HPL bieten auch hier genau diese Gestaltungsfreiheit, ihre Brennbarkeit lässt eine Verwendung in den genannten Bereichen jedoch bislang nicht zu. Die vorliegende Erfindung schafft hier Abhilfe, indem sie die benötigten HPL zur Verfügung stellt. Es gelingt den Wunsch der gestalterischen Vielfalt von HPL mit den Brandeigenschaften von A2-Werkstoffen zu verbinden. Die Montage erfolgt hier ebenfalls mit Hinterlüftung. Besonders bei der Sanierung von Altbauten wird dabei die aus baubiologischer Sicht notwendige Belüftung des Mauerwerkes sichergestellt. Zusätzlich erlaubt diese Art der Montage einen einfachen Ausgleich von Unebenheiten und ermöglicht die Installation einer dauerhaften, pflegeleichten und hygienische Wandverkleidung.

### Beispiele

Die Erfindung wird durch folgende Beispiele untermauert ohne diese Einzuschränken:
Beispiel 1: Dekorplatte Thermopal flameprotect compact (Produkt der Firma Thermopal GmbH) Laborausmusterung, einfarbig weiß, 6,50mm (Vergleichsbeispiel):
   Beidseitige nichtbrennbare dekorative Platte bestimmt für die Innenanwendung. Kernaufbau optisch homogen, hell.
Beispiel 2: Kernplatte ohne Hydrophobierung ohne Dekor:
   Aufbau: 8d Lagen (nur Kern). 8 Kernlagen aus dem erfindungsgemäßen textilen Flächengebilde getränkt mit der erfindungsgemäßen Kernformulierung (0% Hydrophobierung, Füllstoff: CaCO₃ Bindemittel Phenol- Formaldehydharz Verhältnis Festkörper Harz : Füllstoff = 1:10,5, Hilfsstoff: Carboxymethylcellulose, Tränkhilfsmittel: Wasser, Methanol)
Beispiel 3: Beidseitig dekorative erfindungsgemäße Platte mit Festigkeitsgradienten für die Innenanwendung:
   Aufbau: Symmetrischer Aufbau, 8 Kernlagen (8d), jeweils eine Stützschicht (c), jeweils eine Klebeschicht (b)und jeweils eine Dekorschicht (a2); Gesamtaufbau a2,b,c,8d,c,b,a2.
   Melamin -Formaldehydharz imprägniertes einfärbiges Dekorpapier mit einem Flächengewicht von 90g/m², erfindungsgemäßes Klebevlies, erfindungsgemäßes Verstärkungsvlies, 8 Kernlagen aus dem erfindungsgemäßen textilen Flächengebilde getränkt mit der erfindungsgemäßen Kernformulierung (0% Hydrophobierung, Füllstoff: CaCO₃ Bindemittel Phenol- Formaldehydharz Verhältnis Festkörper Harz : Füllstoff = 1:10,5, Hilfsstoff: Carboxymethylcellulose, Tränkhilfsmittel: Wasser, Methanol), erfindungsgemäßes Verstärkungsvlies, erfindungsgemäßes Klebevlies, Melamin -Formaldehydharz imprägniertes einfärbiges Dekorpapier mit einem Flächengewicht von 90g/m².
Beispiel 4: Beidseitig dekorative erfindungsgemäße Platte mit Festigkeitsgradienten für die Außenanwendung
   Aufbau: Symmetrischer Aufbau, 8 Kernlagen (8d), jeweils eine Stützschicht (c), jeweils eine Klebeschicht (b), jeweils eine Dekorschicht (a2) und jeweils eine Schutzschicht (a1); Gesamtaufbau a1,a2,b,c,8d,c,b,a2,a1
   Bewitterungsstabiles Polyurethanacrylatcoating , Melamin -Formaldehydharz imprägniertes bedrucktes Dekorpapier mit einem Flächengewicht von 80g/m², erfindungsgemäßes Klebevlies, erfindungsgemäßes Verstärkungsvlies, 8 Kernlagen aus dem erfindungsgemäßen textilen Flächengebilde getränkt mit der erfindungsgemäßen Kernformulierung (0% Hydrophobierung, Füllstoff: CaCO₃ Bindemittel Phenol- Formaldehydharz Verhältnis Festkörper Harz : Füllstoff = 1:10,5, Hilfsstoff: Carboxymethylcellulose, Tränkhilfsmittel: Wasser, Methanol), erfindungsgemäßes Verstärkungsvlies, erfindungsgemäßes Klebevlies, Melamin - Formaldehydharz imprägniertes einfärbiges Dekorpapier mit einem Flächengewicht von 80g/m², Bewitterungsstabiles Polyurethanacrylatcoating.
Beispiel 5: Kernplatte mit Hydrophobierung ohne Dekor:
   Aufbau: 8d Lagen.
   8 Kernlagen aus dem erfindungsgemäßen textilen Flächengebilde getränkt mit der erfindungsgemäßen Kernformulierung (2% Hydrophobierungsmittel auf Polysiloxanbasis, Füllstoff: CaCO₃ Bindemittel Phenol- Formaldehydharz Verhältnis Festkörper Harz : Füllstoff = 1:10, Hilfsstoff: Carboxymethylcellulose, Tränkhilfsmittel: Wasser, Methanol)
Beispiel 6: Beidseitig dekorative erfindungsgemäße Platte mit Festigkeitsgradienten für die Außenanwendung, hochfeuchtestabil
   Aufbau: Symmetrischer Aufbau, 8 Kernlagen (8d), jeweils eine Stützschicht (c), jeweils eine Klebeschicht (b), jeweils eine Dekorschicht (a2) und jeweils eine Schutzschicht (a1); Gesamtaufbau a1,a2,b,c,8d,c,b,a2,a1
   Bewitterungsstabiles Polyurethanacrylatcoating , Melamin -Formaldehydharz imprägniertes bedrucktes Dekorpapier mit einem Flächengewicht von 80g/m², erfindungsgemäßes Klebevlies, erfindungsgemäßes Verstärkungsvlies, 8 Kernlagen aus dem erfindungsgemäßen textilen Flächengebilde getränkt mit der erfindungsgemäßen Kernformulierung (2% Hydrophobierungsmittel auf Polysiloxanbasis, Füllstoff: CaCO₃, Bindemittel Phenol- Formaldehydharz Verhältnis Festkörper Harz : Füllstoff = 1:10, Hilfsstoff: Carboxymethylcellulose, Tränkhilfsmittel: Wasser, Methanol) erfindungsgemäßes Verstärkungsvlies, erfindungsgemäßes Klebevlies, Melamin -Formaldehydharz imprägniertes einfärbiges Dekorpapier mit einem Flächengewicht von 80g/m², Bewitterungsstabiles Polyurethanacrylatcoating

In Tabelle 1 sind die Ergebnisse der Prüfung der Beispiele enthalten. Besonderes Augenmerk bei der Interpretation der Prüfergebnisse ist einerseits auf die besonders hohen mechanischen Festigkeitswerte aber auch auf Wasserlagerungs- und Bewitterungsergebnisse der erfindungsgemäßen Laminate zu legen.

Das erfindungsgemäße Beispiel 4 übertrifft das kommerziell erhältliche Produkt Beispiel 1 in den Werten Biegefestigkeit um 56% und Biegeemodul um 25%. Dickenzunahmen und Kantendickenzunahmen der Produkte sind vergleichbar. Die Beständigkeit gegenüber siedendes Wasser ist bei Beispiel 4 ebenfalls gut, wobei Beispiel 1 diesen Test nicht ohne Blasenbildung an den Dekorseiten übersteht. Beispiel 4 übertrifft aufgrund seines PUA Coatings bezüglich Bewitterungsstabilität Beispiel 1 deutlich.

Eine weitere Verbesserung der Feuchtestabilität und auch der Stabilität unter wechselnden Klimaverhältnissen stellt Beispiel 6 dar. Die Veränderungen von Dicke bzw. Kantendicke unter Wassereinwirkung sind um 80 bzw. 60% niedriger als beim Referenzprodukt Beispiel 1. Die Biegefestigkeiten von Beispiel 4 nach schnellem Klimawechsel übertreffen Beispiel 1 um 75%.

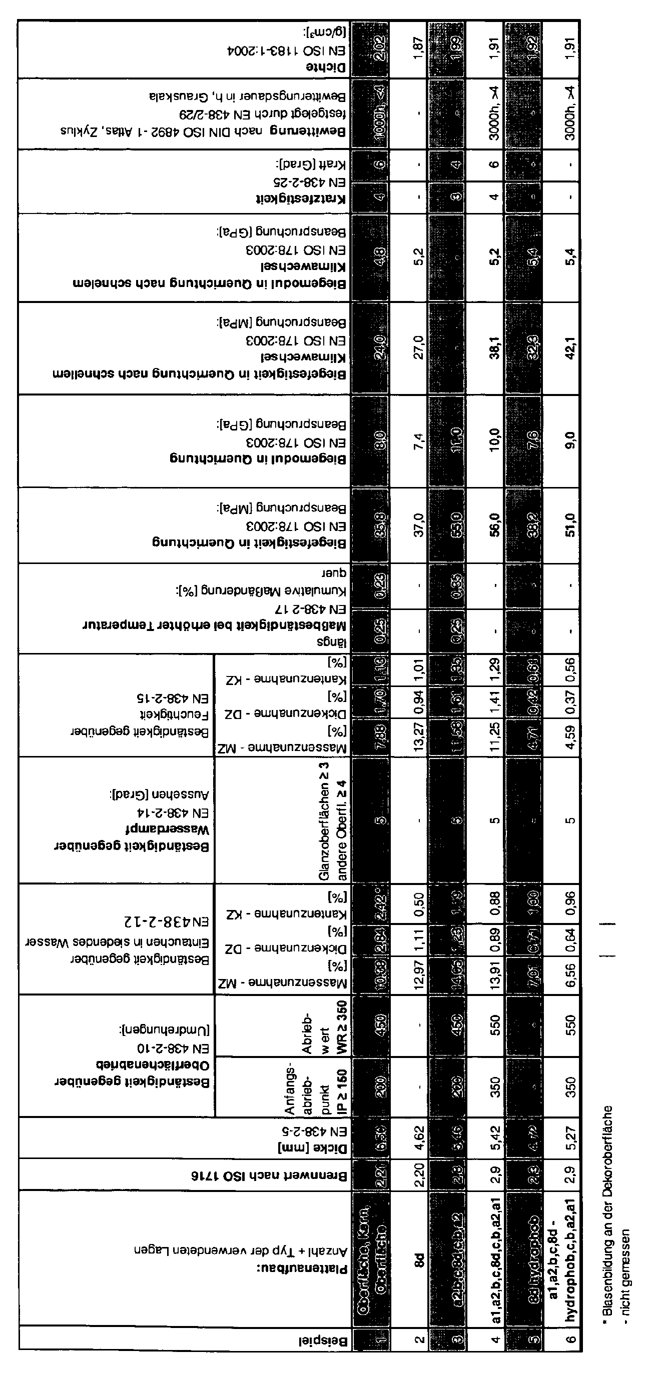

## Patentansprüche

1. Laminat, **dadurch gekennzeichnet, dass** es
A) einen symmetrisch oder asymmetrisch angeordneten Laminatkern, aus einer Matrix umfassend
- 3 -17 Gew.-% organisches Binderharz
- 45 - 85% Gew.-% anorganische Füllstoffe
- 10 - 25% Gew.-% anorganische und/oder organische Fasern,
wobei der Laminatkern mehrlagig aufgebaut ist, die einzelnen Kernlagen jedoch nach Produktfertigstellung untereinander und auch mit den darunter und darüber liegenden funktionellen Lagen untrennbar verbunden sind, und ferner
- eine Dichte von mindestens 1,70 g/cm³ bestimmt gemäß EN ISO 1183-1:2004, vorzugsweise von mindestens 1,80g/cm³,
- eine Biegefestigkeit von mindestens 35 MPa bestimmt gemäß EN ISO 178:2003, vorzugsweise von mindestens 45 MPa,
- ein Biegemodul von mindestens 7 GPa bestimmt gemäß EN ISO 178:2003, vorzugsweise von mindestens 8,5 GPa, aufweist,
B) mindestens eine Stützschicht, die auf mindestens einer der beiden Oberflächen des Laminatkerns aufgebracht ist, wobei die Stützschicht
- mindestens eine Lage, vorzugsweise mindestens zwei Lagen, aus textilem Flächengebilde umfasst, das einen endverfestigten B-Stage Binderanteil von 5-30 Gew.-% aufweist, wobei sich diese Angabe auf das Gesamtgewicht der textilen Fläche mit Binder nach dessen Überführung in den B-Stage Zustand bezieht,
C) mindestens eine Klebeschicht, die auf der zum Laminatkern abgewandten Oberfläche der Stützschicht aufgebracht ist, wobei die Klebeschicht
- mindestens eine Lage, vorzugsweise mindestens zwei Lagen, aus textilem Flächengebilde umfasst, das einen endverfestigten B-Stage Binderanteil von 40-80 Gew.-% aufweist, wobei sich diese Angabe auf das Gesamtgewicht der textilen Fläche mit Binder nach dessen Überführung in den B-Stage Zustand bezieht,
D) mindestens eine Dekorschicht, die auf der zum Laminatkern abgewandten Oberfläche der Klebschicht aufgebracht ist, wobei die Dekorschicht mehrschichtig aufgebaut sein kann, umfasst.

2. Laminat nach Anspruch 1, **dadurch gekennzeichnet, dass** es einen Brennwert ≤3MJ/kg nach ISO 1716 aufweist

3. Laminat nach Anspruch 1 oder 2, **dadurch gekennzeichnet, dass** mindestens eine Schutzschicht, die auf der zum Laminatkern abgewandten Oberfläche der Dekorschicht aufgebracht ist.

4. Laminat gemäß einem der Ansprüche 1 bis 3, **dadurch gekennzeichnet, dass** es sich bei den textilen Flächengebilden in der Stützschicht und der Klebeschicht um Gebilde aus Fasern handelt, die Mittels einer flächenbildenden Technik zu einem textilen Flächegebilde verarbeitet sind, vorzugsweise handelt es sich bei den textilen Flächengebilden um Gewebe, Gelege, Gestricke, Gewirke und/oder Vliese, insbesondere Vliese.

5. Laminat gemäß Anspruch 4, **dadurch gekennzeichnet, dass** es sich bei den Fasern um keramische Fasern, Mineralfasern, Glasfasern oder Gemische derselben handelt, vorzugsweise auch in Mischung mit polymeren Fasern und Filamenten, sowie Naturfasern und/oder Kohlefasern.

6. Laminat gemäß einem der Ansprüche 1 bis 5, **dadurch gekennzeichnet, dass** der endverfestigte B-Stage Binder in der Stützschicht und der Klebeschicht ein Binder auf Basis von Furfurylalkohol-Formaldehyd-, Phenol-Formaldehyd-, Melamin-Formaldehyd-, Harnstoff-Formaldehydharzen und deren Mischung ist.

7. Laminat gemäß einem der Ansprüche 1 bis 6, **dadurch gekennzeichnet, dass** der Laminatkern ein Masseverhältnis von Fasern zu mineralischen Füllern von 1:3 bis 1:9, vorzugsweise von 1:4,5 bis 1:6, aufweist.

8. Laminat gemäß einem der Ansprüche 1 bis 7, **dadurch gekennzeichnet, dass** das textile Flächengebilde in der Stützschicht ein Flächengewicht zwischen 140 und 600 g/m², vorzugsweise 200 und 300 g/m², aufweist, wobei sich diesen Angaben auf ein Flächengebilde ohne Binder beziehen.

9. Laminat gemäß einem der Ansprüche 1 bis 8, **dadurch gekennzeichnet, dass** das textile Flächengebilde in der Klebeschicht ein Flächengewicht zwischen 25 und 500 g/m², vorzugsweise 30 und 70 g/m², aufweist, wobei sich diesen Angaben auf ein Flächengebilde ohne Binder beziehen.

10. Laminat gemäß einem der Ansprüche 1 bis 9, **dadurch gekennzeichnet, dass** das Gesamtflächengewicht (Summe der einzelnen textilen Flächen) der für die Klebeschicht verwendeten textilen Flächen um min. 20% geringer als das Gesamtflächengewicht der für die Stützlage eingesetzten textilen Flächengebilden ist.

11. Laminat gemäß einem der Ansprüche 1 bis 10, **dadurch gekennzeichnet, dass** die Dekorschicht ein Dekorpapier mit einem Flächengewicht zwischen 25 und 140 g/m² ist oder ein textiles Flächengebilde, vorzugsweise ein Gewebe oder Vlies, insbesondere auf Basis von Mineral- und/oder Glasfasern, ist.

12. Laminat gemäß Anspruch 10, **dadurch gekennzeichnet, dass** die Dekorschicht ein textiles Flächengebilde mit einem Flächengewicht zwischen 30 und 250 g/m², vorzugsweise zwischen 40 und 70 g/m², ist.

13. Laminat gemäß Anspruch 12, **dadurch gekennzeichnet, dass** textile Flächengebilde der Dekorschicht einen endverfestigten B-Stage Binder aufweist.

14. Laminat-Vorprodukt, **dadurch gekennzeichnet, dass** es
A) einen symmetrisch oder asymmetrisch angeordneten Laminatkern, der
- mindestens zwei Lagen, vorzugsweise mindestens drei Lagen, aus mineralisch gefülltem textilen Flächengebilde aufweist, wobei das textile Flächengebilde mit einem Binderanteil von 5-20 Gew.-%, wobei sich diese Angabe auf das Gesamtgewicht der textilen Fläche mit Binder bezieht, verfestigt ist, und
- mit 60 bis 90 Gew.-% einer Kernformulierung umfassend:
(i) 1 bis 20 Gew.-%, vorzugsweise 2 bis 15 Gew.-%, insbesondere 8 bis 12 Gew.-%, thermisch härtbares Natur- und/oder Kunstharz,
(ii) 40 bis 90 Gew.-%, vorzugsweise 45 bis 80 Gew.-%, insbesondere 50 bis 75 Gew.-%, anorganische Füllstoffe,
(iii) 1 bis 30 Gew.-%, vorzugsweise 4 bis 25 Gew.-%, insbesondere 9 bis 18 Gew.-%, Wasser,
getränkt ist und die erhaltenen Kernlagen bis zu einem Restwassergehalt von bis zu 8 Gew.-%, vorzugsweise bis zu 5 Gew.-%, getrocknet und das Harz in einen reaktiven B-Stage Zustand übergeführt wurde,
B) mindestens eine Stützschicht, die auf mindestens einer der beiden Oberflächen des Laminatkerns aufgebracht ist, wobei die Stützschicht
- mindestens eine Lage, vorzugsweise mindestens zwei Lagen, aus textilen Flächengebilden umfasst, die jeweils einen B-Stage Binderanteil von 5-30 Gew.-% im B-Stage Zustand aufweisen, wobei sich diese Angabe auf das Gesamtgewicht der textilen Fläche mit Binder nach dessen Überführung in den B-Stage Zustand bezieht,
C) mindestens eine Klebeschicht, die auf der zum Laminatkern abgewandten Oberfläche der Stützschicht aufgebracht ist, wobei die Klebeschicht
- mindestens eine Lage, vorzugsweise mindestens zwei Lagen, aus textilem Flächengebilden umfasst, die einen B-Stage Binderanteil von 40-80 Gew.-% im B-Stage Zustand aufweist, wobei sich diese Angabe auf das Gesamtgewicht der textilen Fläche mit Binder nach dessen Überführung in den B-Stage Zustand bezieht,
D) mindestens eine Dekorschicht, die auf der zum Laminatkern abgewandten Oberfläche der Klebschicht aufgebracht ist, wobei die Dekorschicht mehrschichtig aufgebaut sein kann, umfasst

15. Laminatvorprodukt gemäß Anspruch 14, **dadurch gekennzeichnet, dass** es einen Brennwert ≤3MJ/kg nach ISO 1716 aufweist

16. Laminatvorprodukt nach Anspruch 14 oder 15, **dadurch gekennzeichnet, dass** es mindestens eine Schutzschicht aufweist, die auf der zum Laminatkern abgewandten Oberfläche der Dekorschicht aufgebracht ist.

17. Laminat-Vorprodukt gemäß einem der Ansprüche 14 bis 16, **dadurch gekennzeichnet, dass** die Kernformulierung eine Viskosität von 100-500 mPas, bevorzugt von 120-200 mPas, gemessen bei 25°C, und einem Festkörpergehalt von 55-90 Gew.-%, bevorzugt von 63-75 Gew.-% aufweist.

18. Laminat-Vorprodukt gemäß einem der Ansprüche 14 bis 17, **dadurch gekennzeichnet, dass** es sich bei den textilen Flächengebilden im Laminatkern, der Stützschicht und der Klebeschicht um Gebilde aus Fasern handelt, die Mittels einer flächenbildenden Technik zu einem textilen Flächegebilde verarbeitet sind, vorzugsweise handelt es sich bei den textilen Flächengebilden um Gewebe, Gelege, Gestricke, Gewirke und/oder Vliese, insbesondere Vliese.

19. Laminat-Vorprodukt gemäß Anspruch 18, **dadurch gekennzeichnet, dass** es sich bei den Fasern um keramische Fasern, Mineralfasern, Glasfasern oder Gemische derselben handelt, vorzugsweise auch in Mischung mit polymeren Fasern und Filamenten, sowie Naturfasern und/oder Kohlefasern.

20. Laminat-Vorprodukt gemäß einem der Ansprüche 14 bis 19, **dadurch gekennzeichnet, dass** sich der B-Stage Binder in der Stützschicht und der Klebeschicht im B-Stage Zustand befindet, vorzugsweise handelt es sich um einen Binder auf Basis von Furfurylalkohol-Formaldehyd-, Phenol-Formaldehyd-, Melamin-Formaldehyd-, Harnstoff-Formaldehydharzen und deren Gemische.

21. Laminat-Vorprodukt gemäß Anspruch 14 bis 20, **dadurch gekennzeichnet, dass** der Laminatkern 2 bis 50 Lagen, bevorzugt 2 bis 30 Lagen, des textilen Flächengebildes aufweist.

22. Laminat-Vorprodukt gemäß Anspruch 14 bis 21, **dadurch gekennzeichnet, dass** das textile Flächengebilde im Laminatkern ein Flächengewicht zwischen 80 und 250 g/m², vorzugsweise 100 und 200 g/m², aufweist, wobei sich diesen Angaben auf ein Flächengebilde ohne Binder beziehen.

23. Laminat-Vorprodukt gemäß Anspruch 14 bis 22, **dadurch gekennzeichnet, dass** das textile Flächengebilde im Laminatkern eine Porosität von mindestens 500 I/m²sec, bevorzugt 1000 I/m²sec - 3000 I/m²sec aufweist.

24. Laminat-Vorprodukt gemäß Anspruch 14 bis 23, **dadurch gekennzeichnet, dass** das textile Flächengebilde in der Stützschicht ein Flächengewicht zwischen 140 und 600 g/m², vorzugsweise 200 und 300 g/m², aufweist, wobei sich diesen Angaben auf ein Flächengebilde ohne Binder beziehen.

25. Laminat-Vorprodukt gemäß Anspruch 14 bis 24, **dadurch gekennzeichnet, dass** das textile Flächengebilde in der Klebeschicht ein Flächengewicht zwischen 25 und 500 g/m², vorzugsweise 30 und 70 g/m², aufweist, wobei sich diesen Angaben auf ein Flächengebilde ohne Binder beziehen.

26. Laminat-Vorprodukt gemäß Anspruch 14 bis 25, **dadurch gekennzeichnet, dass** das Gesamtflächengewicht (Summe der einzelnen textilen Flächen) der für die Klebeschicht verwendeten textilen Flächen um min. 20% geringer als das Gesamtflächengewicht der für die Stützlage eingesetzten textilen Flächengebilden ist.

27. Laminat-Vorprodukt gemäß Anspruch 14 bis 26, **dadurch gekennzeichnet, dass** die Dekorschicht ein Dekorpapier mit einem Flächengewicht zwischen 25 und 140 g/m² ist oder ein textiles Flächengebilde, vorzugsweise ein Gewebe oder Vlies, insbesondere auf Basis von Mineral- und/oder Glasfasern, ist.

28. Laminat-Vorprodukt gemäß Anspruch 27, **dadurch gekennzeichnet, dass** die Dekorschicht ein textiles Flächengebilde mit einem Flächengewicht zwischen 30 und 250 g/m², vorzugsweise zwischen 40 und 70 g/m², ist.

29. Laminat-Vorprodukt gemäß Anspruch 28, **dadurch gekennzeichnet, dass** textile Flächengebilde der Dekorschicht einen Binder im B-Stage Zustand aufweist.

30. Verfahren zur Herstellung eines Laminats, definiert in den Ansprüchen 1 bis 13, umfassend die Schritte:
A) Bildung oder Zuführung eines symmetrisch oder asymmetrisch angeordneten Laminatkernes, der
- mindestens zwei Lagen, vorzugsweise mindestens drei Lagen, aus mineralisch gefülltem textilen Flächengebilde aufweist, wobei das textile Flächengebilde mit einem Binderanteil von 5-20 Gew.-%, wobei sich diese Angabe auf das Gesamtgewicht der textilen Fläche mit Binder bezieht, verfestigt ist, und
- mit 60 bis 90 Gew.-% einer Kernformulierung umfassend:
(i) 1 bis 20 Gew.-%, vorzugsweise 2 bis 15 Gew.-%, insbesondere 8 bis 12 Gew.-%, thermisch härtbares Naturund/oder Kunstharz,
(ii) 40 bis 90 Gew.-%, vorzugsweise 45 bis 80 Gew.-%, insbesondere 50 bis 75 Gew.-%, anorganische Füllstoffe,
(iii) 1 bis 30 Gew.-%, vorzugsweise 4 bis 25 Gew.-%,
insbesondere 9 bis 18 Gew.-%, Verdünnungswasser, getränkt und die erhaltenen Kernlagen bis zu einem Restwassergehalt von bis zu 8 Gew.-%, vorzugsweise bis zu 5 Gew.-%, getrocknet und das Harz in einen reaktiven B-Stage Zustand übergeführt wurde,
B) Zuführen mindestens eine Stützschicht, die auf mindestens einer der beiden Oberflächen des Laminatkerns aufgebracht wird, wobei die Stützschicht
- mindestens eine Lage, vorzugsweise mindestens zwei Lagen, aus textilen Flächengebilden umfasst, die jeweils einen B-Stage Binderanteil von 5-30 Gew.-% im B-Stage Zustand aufweisen, wobei sich diese Angabe auf das Gesamtgewicht der textilen Fläche mit Binder nach dessen Überführung in den B-Stage Zustand bezieht,
C) Zuführen mindestens eine Klebeschicht, die auf der zum Laminatkern abgewandten Oberfläche der Stützschicht aufgebracht wird, wobei die Klebeschicht
- mindestens eine Lage, vorzugsweise mindestens zwei Lagen, aus textilem Flächengebilden umfasst, die einen B-Stage Binderanteil von 40-80 Gew.-% im B-Stage Zustand aufweist, wobei sich diese Angabe auf das Gesamtgewicht der textilen Fläche mit Binder nach dessen Überführung in den B-Stage Zustand bezieht,
D) Zuführen mindestens eine Dekorschicht, die auf der zum Laminatkern abgewandten Oberfläche der Klebschicht aufgebracht wird, wobei die Dekorschicht mehrschichtig aufgebaut sein kann,
E) Laminieren der vorstehend genannten Schichten unter Einwirkung von Druck und Temperatur.

31. Verfahren nach Anspruch 30, **dadurch gekennzeichnet, dass** vor Schritt E) mindestens eine Schutzschicht, die auf der zum Laminatkern abgewandten Oberfläche der Dekorschicht aufgebracht wird.

32. Verwendung des Laminats, definiert in den Ansprüchen 1 bis 13, zur Herstellung bzw. in Oberflächen im Innen oder Außenbereich von Bauwerken.
